# EUROPÄISCHE PATENTSCHRIFT

(11) **EP 2 207 689 B1**
(45) Veröffentlichungstag und Bekanntmachung des Hinweises auf die Patenterteilung: **14.05.2014**
(21) Anmeldenummer: 08848629.5
(22) Anmeldetag: 22.10.2008
(51) Int. Cl.: B60G 3/20, B60G 7/00, B62D 7/18

(54) **EINZELRADAUFHÄNGUNG**
INDEPENDENT WHEEL SUSPENSION
SUSPENSION À ROUES INDÉPENDANTES

(30) Priorität: 15.11.2007 DE 102007047788
(43) Veröffentlichungstag der Anmeldung: 21.07.2010
(60) Teilanmeldung: 10168511.3
(73) Patentinhaber: ZF Friedrichshafen AG, 88038 Friedrichshafen (DE)
(72) Erfinder: GELL, Klaus, 94130 Obernzell (DE); SOLKA, Ulrich, 94081 Fürstenzell (DE); WIMMER, Hans, 94127 Neuburg (Inn) (DE)
(86) Internationale Anmeldenummer: PCT/EP2008/064251
(87) Internationale Veröffentlichungsnummer: WO 2009/062824

(56) Entgegenhaltungen:
- EP-A- 1 837 210
- WO-A-2005/091699
- DE-A1- 3 034 092
- DE-A1-102004 014 555
- DE-C- 943 930
- US-A- 2 057 372

## Beschreibung

Die vorliegende Erfindung bezieht sich auf eine Einzelradaufhängung gemäß dem Oberbegriff des Patentanspruchs 1 und des Patentanspruchs 6.

Aus der WO 2005/091699 A1 der Anmelderin ist beispielsweise eine Radaufhängung für ein lenkbares Fahrzeugrad bekannt, mit einem um eine Drehachse drehbar angeordneten Achsschenkel, welcher sich auf einem Träger abstützt, wobei der Träger über ein Feder-Dämpfer-Modul mit dem Fahrzeugrahmen verbunden ist.

Die bekannte Radaufhängung weist einen koaxial zur Drehachse angeordneten Achsschenkelbolzen, mindestens einen oberen Querlenker und mindestens einen unteren Querlenker auf, wobei die Querlenker mit dem Fahrzeugrahmen und über mindestens ein Verbindungsmittel mit dem Achsschenkel in Verbindung stehen. Gemäß der WO 2005/091699 A1 ist der Träger über eine koaxial zur Drehachse angeordnete Lagerung mit dem Achsschenkel verbunden, wobei die Verbindungsmittel koaxial zur Drehachse angeordnet sind und wobei die Querlenker mit den Verbindungsmitteln verbunden sind.

Des weiteren ist aus der DE 10 2004 014 555 A1 der Anmelderin eine Radaufhängung für ein lenkbares Fahrzeugrad bekannt, mit einem um eine Drehachse drehbar angeordneten Achsschenkel, der über einen Achsschenkelbolzen mit einem oberen Querlenker und einem unteren Querlenker in Verbindung steht, mit einem oberen Querlenkerlager und einem unteren Querlenkerlager, über die die Querlenker mit dem Achsschenkel in Verbindung stehen, bei der mindestens ein Querlenker einen am Querlenkerlager beginnenden Abschnitt aufweist, bei dem der Querlenker in seiner Breite nahezu gleich bleibt oder sich verschmälert. Vorzugsweise wird dieser Abschnitt durch sich überkreuzende oder durchdringende Querlenker erreicht.

Ferner ist aus der DE 100 30 028 A1 der Anmelderin eine Radaufhängung für ein gelenktes Rad eines Kraftfahrzeugs bekannt. Die bekannte Radaufhängung weist einen Radträger auf, welcher über obere Lenker und untere Lenker mit einem Chassis eines Kraftfahrzeugs verbunden ist, wobei der Radträger direkt mit einem Federträger verbunden ist. Hierbei ist der Federträger drehbar im Radträger gelagert, wobei durch die Verwendung eines Bolzens, welcher einerseits mit dem Federträger und andererseits mit dem Radträger verbunden ist, eine kompakte Radaufhängung realisiert wird.

Im Rahmen der DE 102 52 135 A1 der Anmelderin ist eine Einzelradaufhängung für Kraftfahrzeuge, insbesondere für NKWs, umfassend Achsquerlenker und Achslängslenker, beschrieben, bei der zumindest die hauptbeanspruchten Lenkerarme und -streben der Quer- und Längslenker in jedem Bereich einen Ellipsenquerschnitt aufweisen.

Der vorliegenden Erfindung liegt die Aufgabe zugrunde, ausgehend von dem erwähnten Stand der Technik, eine Einzelradaufhängung anzugeben, bei der der Achsschenkelbolzen hinsichtlich der Funktionalität optimiert wird und die axiale und/oder radiale Fixierung des Federträgers und des Achsschenkelbolzens an sich sowie zueinander auf einfache Weise realisiert wird.

Diese Aufgabe wird durch die Merkmale der Patentansprüche 1 und 6 gelöst. Weitere erfindungsgemäße Ausgestaltungen und Vorteile gehen aus den Unteransprüchen hervor.

Demnach wird eine Einzelradaufhängung vorgeschlagen, mit einem um eine Drehachse drehbar angeordneten Achsschenkel, welcher sich auf einem Federträger abstützt, der über einen Dämpfer und eine Luftfeder oder über ein Feder-Dämpfer-Modul mit dem Fahrzeugrahmen verbunden ist, wobei der Achsschenkel über einen Achsschenkelbolzen mit dem Federträger verbunden ist.

Hierbei weist die Einzelradaufhängung mindestens einen oberen Querlenker und mindestens einen unteren Querlenker auf, wobei die Querlenker am oberen Ende bzw. am unteren Ende des Achsschenkelbolzens gelagert sind, wobei der Achsschenkel und die Querlenker schwenkbar zum Achsschenkelbolzen gelagert und der Federträger drehfest mit dem Achsschenkelbolzen verbunden ist.

Gemäß einer ersten erfindungsgemäßen Ausgestaltung einer Einzelradaufhängung ist der Achsschenkelbolzen zweiteilig ausgeführt und weist ein oberes Teil und ein unteres Teil auf, wobei die axiale und/oder radiale Fixierung und/oder Verdrehsicherung der Teile zueinander und/oder zum Federträger durch das Zusammenwirken der Teile mit dem Federträger erfolgt.

Die Erfindung wird im folgenden anhand der beigefügten Figuren beispielhaft näher erläutert, wobei gleiche Bauteile mit gleichen Bezugszeichen bezeichnet sind. Es zeigen:
- Figur 1:: Eine schematische Ansicht einer Einzelradaufhängung gemäß der WO 2005/091699 A1 der Anmelderin, umfassend ein Luftfeder-Dämpfer-Modul;
- Figur 2:: Eine schematische Ansicht einer Einzelradaufhängung gemäß der WO 2005/091699 A1 der Anmelderin, umfassend eine Luftfeder und einen Dämpfer;
- Figur 3:: Eine perspektivische Ansicht einer nicht erfindungsgemäßen Ausgestaltung des Achsschenkelbolzens;
- Figur 4:: Eine perspektivische Ansicht einer weiteren nicht erfindungsgemäßen Ausgestaltung des Achsschenkelbolzens;
- Figur 5:: Ansichten einer vorteilhaften nicht erfindungsgemäßen Ausgestaltung des Achsschenkelbolzens;
- Figur 6:: Eine Ansicht einer weiteren vorteilhaften nicht erfindungsgemäßen Ausgestaltung des Achsschenkelbolzens und dessen Anbindung zum Federträger;
- Figur 7:: Eine perspektivische Ansicht einer weiteren vorteilhaften nicht erfindungsgemäßen Ausgestaltung des Achsschenkelbolzens und dessen Anbindung zum Federträger;
- Figur 8:: Perspektivische Ansichten einer erfindungsgemäßen Ausgestaltung des Achsschenkelbolzens und dessen Anbindung zum Federträger;
- Figur 9:: Perspektivische Ansichten einer weiteren vorteilhaften Ausgestaltung des Achsschenkelbolzens und dessen Anbindung zum Federträger;
- Figur 10:: Eine Ansicht einer vorteilhaften erfindungsgemäßen Ausgestaltung des Achsschenkelbolzens sowie dessen Anbindung zum Federträger;
- Figur 11:: Ansichten einer weiteren vorteilhaften erfindungsgemäßen Ausgestaltung des Achsschenkelbolzens und dessen Anbindung zum Federträger ;
- Figur 12:: Eine perspektivische Ansicht einer unbeanspruchten Ausgestaltung des Achsschenkelbolzens;
- Figur 13:: Eine perspektivische Ansicht einer unbeanspruchten Ausgestaltung des Achsschenkelbolzens und der Anbindung der Quergelenklagerungen;
- Figur 14:: Eine perspektivische Ansicht einer weiteren unbeanspruchten Ausgestaltung des Achsschenkelbolzens und der Anbindung der Quergelenklagerungen;
- Figur 15:: Eine Ansicht einer weiteren vorteilhaften erfindungsgemäßen Ausgestaltung des Achsschenkelbolzens und der Anbindung der Quergelenklagerungen;
- Figur 16:: Eine Ansicht einer weiteren vorteilhaften erfindungsgemäßen Ausgestaltung des Achsschenkelbolzens;
- Figur 17:: Eine perspektivische Ansicht einer weiteren vorteilhaften erfindungsgemäßen Ausgestaltung des Achsschenkelbolzens und der Anbindung der Quergelenklagerungen; und
- Figur 18:: Eine Ansicht einer weiteren vorteilhaften erfindungsgemäßen Ausgestaltung des Achsschenkelbolzens.

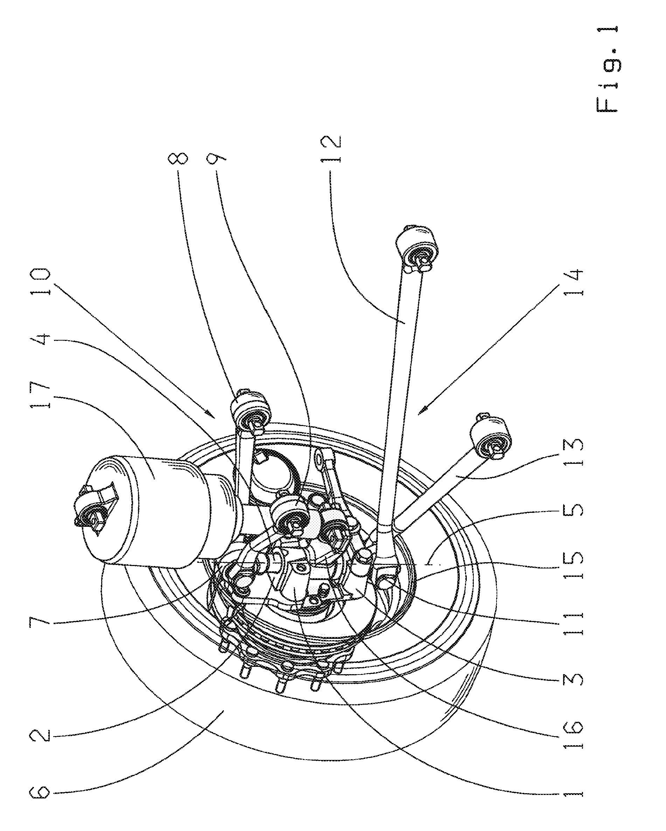

In Figur 1 ist eine Radaufhängung gemäß der WO 2005/091699 A1 der Anmelderin, umfassend ein Feder-Dämpfer-Modul schematisch dargestellt.

Hierbei weist der Achsschenkel 1 eine obere Aufnahme 2 und eine untere Aufnahme 3 auf, in welcher sich ein Achsschenkelbolzen 4 befindet, welcher koaxial zu einer Drehachse 5 angeordnet ist. Auf diese Weise kann sich der Achsschenkel 1 um die Achse 5 drehen, um Lenkbewegungen für das Fahrzeugrad 6 auszuführen.

Bei dem in Figur 1 gezeigten Beispiel weist der Achsschenkelbolzen 4 an seinem oberen Ende eine Lagerung 7 auf, welche beispielsweise als Rollenlagerung, Gleitlagerung, Kugelgelenk oder als Molekulargelenk ausgeführt sein kann, und über welche ein erster Arm 8 und ein zweiter Arm 9 eines oberen Querlenkers 10 verbunden sind. Des weiteren weist der Achsschenkelbolzen 4 an seinem unteren Ende eine Lagerung 11 auf, welche wie die Lagerung 7 ausgeführt sein kann und über die ein erster Arm 12 und ein zweiter Arm 13 eines unteren Querlenkers 14 verbunden sind. Indem die oberen Querlenker 10 und die unteren Querlenker 14 direkt mit dem Achsschenkelbolzen 4 verbunden sind, verlängern sich die Querlenker, was zu einer Verbesserung der Feder-Kinematik führt. Vorzugsweise sind die Lagerungen 7 und 11 innerhalb der Felge 15 angeordnet.

Zwischen der oberen Aufnahme 2 und der unteren Aufnahme 3 ist ein Träger bzw. Federträger 16 angeordnet, welcher mit einem Feder-Dämpfer-Modul 17 verbunden ist, so dass sich der Achsschenkel 1 über den Federträger bzw. den Träger 16 und das Feder-Dämpfer-Modul 17 an einem nicht dargestellten Fahrzeugrahmen abstützt. Der erste Arm 8 und der zweite Arm 9 sowie der erste Arm 12 und der zweite Arm 13 sind ebenfalls an einem nicht dargestellten Fahrzeugrahmen angelenkt. Wie aus Figur 1 ersichtlich sind der erste Arm 12 und der zweite Arm 13 überkreuzt angeordnet, wodurch der mögliche Lenkwinkel erhöht werden kann. Hierbei ist das Feder-Dämpfer-Modul 17 außerhalb des Fahrzeugrahmens und oberhalb des oberen Querlenkers 10 angeordnet.

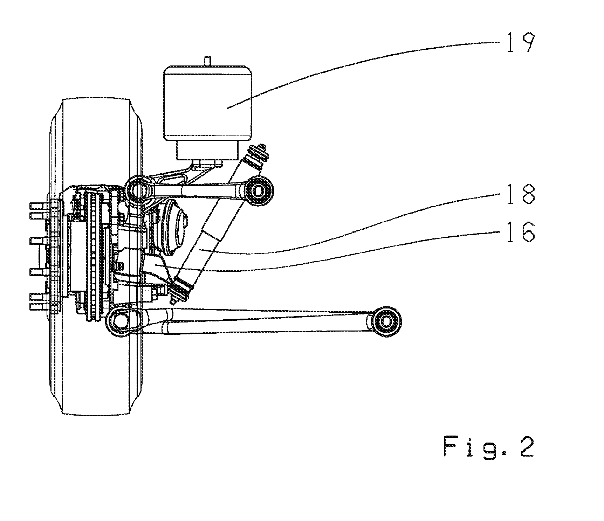

In Figur 2 ist eine Radaufhängung gezeigt, deren prinzipieller Aufbau dem Aufbau der in Figur 1 gezeigten Radaufhängung entspricht, mit dem Unterschied, dass anstelle des Feder-Dämpfer-Moduls 17 ein separater Dämpfer 18 und eine separate Luftfeder 19 verwendet werden. Auch in diesem Fall ist die Luftfeder 19 außerhalb des Fahrzeugrahmens und oberhalb des oberen Querlenkers 10 angeordnet. In den gezeigten Beispielen erfolgt die Abstützung der Radaufstandskraft zum Träger bzw. Federträger 16 und somit zum Fahrzeugrahmen über ein Axiallager.

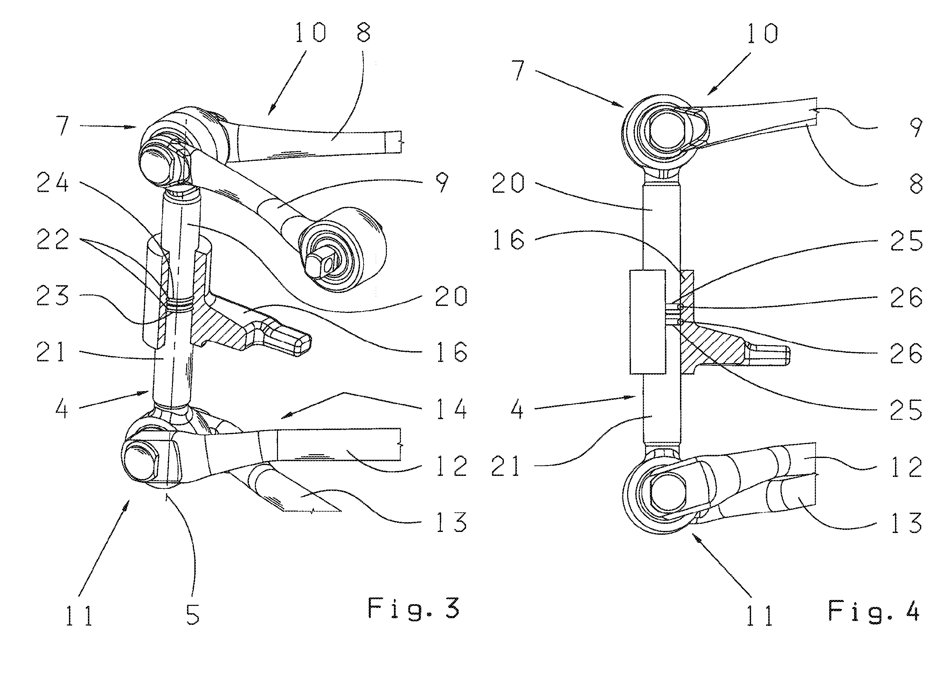

In Figur 3 ist eine Detailansicht eines nicht erfindungsgemäß ausgeführten Achsschenkelbolzens einer Einzelradaufhängung dargestellt, umfassend einen um eine Drehachse 5 drehbar angeordneten Achsschenkel , welcher sich auf einem Federträger 16 abstützt, der über einen Dämpfer und eine Luftfeder oder über ein Feder-Dämpfer-Modul mit dem Fahrzeugrahmen verbunden ist, wobei der Achsschenkel über einen Achsschenkelbolzen 4 mit dem Federträger verbunden ist. Die Einzelradaufhängung weist mindestens einen oberen Querlenker 10 und mindestens einen unteren Querlenker 14 auf, wobei die Querlenker am oberen Ende bzw. am unteren Ende des Achsschenkelbolzens 4 gelagert sind, wobei der Achsschenkel und die Querlenker 10, 14 schwenkbar zum Achsschenkelbolzen 5 gelagert und der Federträger 16 drehfest mit dem Achsschenkelbolzen verbunden ist.

In Figur 3 sowie in den nachfolgenden Figuren ist zum besseren Verständnis der Erfindung der Achsschenkel nicht dargestellt. In den Figuren ist die Lagerung des oberen Querlenkers 10, welcher zwei Querlenkerarme 8, 9 aufweist, mit 7 und die Lagerung des unteren Querlenkers 10, welcher zwei Querlenkerarme 12, 13 aufweist mit 11 bezeichnet.

Bei dem in Figur 3 gezeigten Beispiel ist der Achsschenkelbolzen 4 zweiteilig ausgeführt und weist ein oberes Teil 20 und ein unteres Teil 21 auf, wobei die axiale Fixierung zwischen den Teilen 20, 21 des Achsschenkelbolzens 4 zueinander und zum Federträger 16 mittels Schnappringe 22 erfolgt, wobei zu diesem Zweck im Federträger 16 zwei Ringnuten 23 und in den Teilen 20, 21 jeweils eine Ringnut 24 zur Aufnahme der Schnappringe 22 vorgesehen ist.

Vorzugsweise sind die Teile 20, 21 des Achsschenkelbolzens bei einer zweiteiligen Ausführung desselben identisch ausgeführt, wobei in Abhängigkeit von konstruktiven Gegebenheiten verschiedene Ausführungen der Teile 20, 21 miteinander kombiniert werden können.

Grundsätzlich kann die axiale und radiale Fixierung der Teile 20, 21 zum Federträger 16 oder auch zueinander auch über einen Presssitz erfolgen.

In Figur 4 ist eine weitere nicht erfindungsgemässe Ausgestaltung der axialen Fixierung der Teile 20, 21 des Achsschenkelbolzens 4 zueinander und zum Federträger 16 gezeigt, bei der die Fixierung über Stifte oder Schrauben und dergleichen erfolgt, wobei zu diesem Zweck die Teile 20, 21 jeweils eine Ringnut 25 aufweisen und der Federträger 16 entsprechende Bohrungen 26 für die Stifte oder Schrauben aufweist.

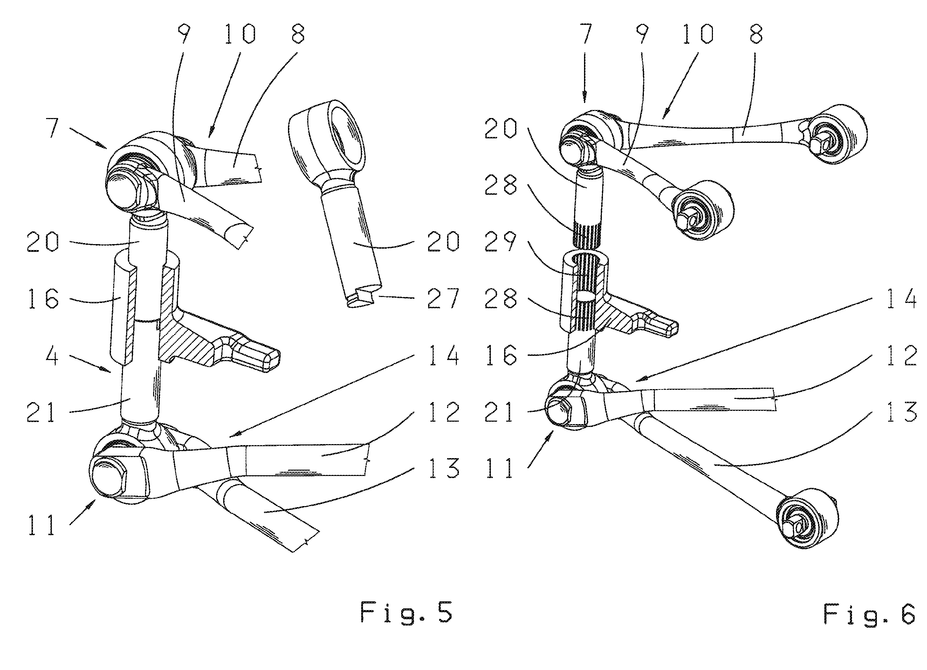

Bei dem in Figur 5 gezeigten nicht erfindungsgemässen Beispiel ist eine Möglichkeit der Verdrehsicherung der Teile 20, 21 eines zweiteilig ausgeführten Achsschenkelbolzens 4 zueinander gezeigt. Hierbei weist jedes Teil 20, 21 an dessen dem anderen Teil zugewandten Ende eine Ausklingung 27 auf, wobei im montierten Zustand die Teile 20, 21 derart verdreht werden, dass sie sich über die Ausklinkungen 27 miteinander in Eingriff befinden. Ein mit einer Ausklinkung 27 versehener Teil 20 ist im rechten teil der Figur 5 dargestellt. Die axiale Fixierung zwischen den Teilen 20, 21 des Achsschenkelbolzens 4 und dem Federträger 16 kann z.B. anhand der in Figuren 3 und 4 gezeigten Konzeptionen erfolgen.

Des weiteren ist in Figur 6 eine weitere nicht erfindungsgemässe Möglichkeit der Verdrehsicherung bzw. radialen Fixierung der Teile 20, 21 eines zweiteilig ausgeführten Achsschenkelbolzens 4 zueinander und zum Federträger 16 veranschaulicht. Hierbei erfolgt die Verdrehsicherung bzw. radiale Fixierung der Teile 20, 21 und des Federträgers 16 zueinander mittels Außenverzahnungen 28 der Teile 20, 21 und einer mit diesen Verzahnungen zusammenwirkenden Innenverzahnung 29 des Federträgers 16.

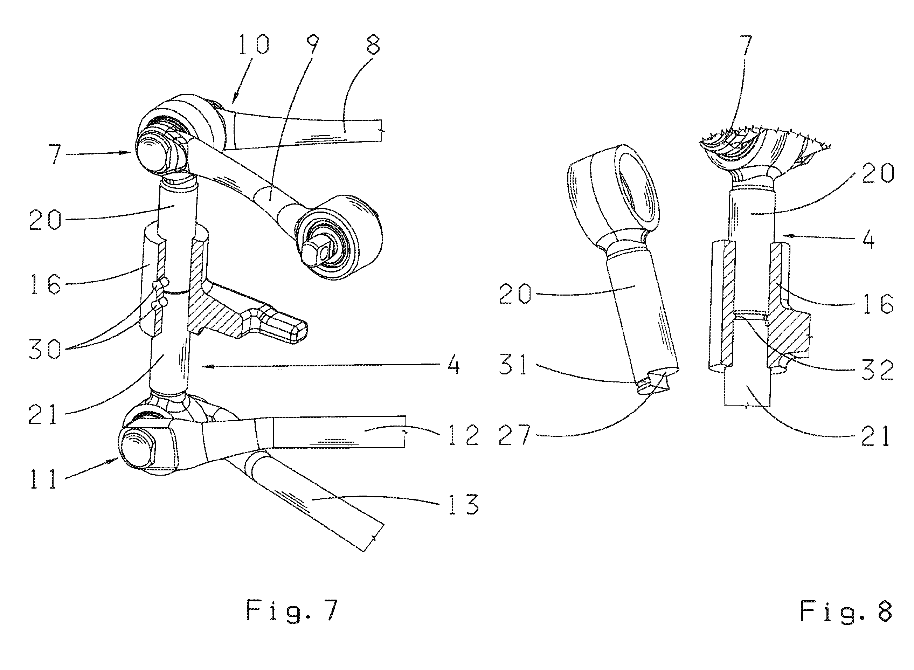

Bei dem in Figur 7 gezeigten nicht erfindungsgemässen Beispiel ist eine Ausgestaltung der axialen und radialen Fixierung zwischen den Teilen 20, 21 des Achsschenkelbolzens 4 und dem Federträger 16 gezeigt, bei der die Fixierung über Stifte 30, Schrauben und dergleichen erfolgt, über die der Federträger 16 mit den Teilen 20, 21 verbunden wird.

Fig. 8:
Die axiale und radiale Fixierung zwischen den Teilen 20, 21 des Achsschenkelbolzens 4 und dem Federträger 16 kann auch mittels Ausklinkungen und Ringnuten erfolgen. Hierbei weist jedes Teil 20, 21 an dessen dem anderen Teil zugewandten Ende eine Ausklingung 27 auf, wobei im montierten Zustand die Teile 20, 21 derart verdreht werden, dass sie sich über die Ausklinkungen 27 miteinander in Eingriff befinden.

Des weiteren weist, wie im linken Teil der Figur 8 gezeigt, jedes Teil 20, 21 an dessen dem anderen Teil zugewandten Ende im Bereich, an dem keine Ausklinkung vorgesehen ist eine Umfangsnut 31 auf, wobei im montierten Zustand, der Gegenstand des rechten Teils der Figur 8 ist, die Umgangsnuten beider Teile eine durchgehende Ringnut ergeben, in die ein am Federträger 16 vorgesehener Steg 32 eingreift. Hierbei ist vorzugsweise vorgesehen, dass zum Zweck der Montage der Federträger 16 zweiteilig ausgeführt ist, wobei nach der Montage die beiden Teile miteinander verbunden werden, was z.B. mittels Verschraubung erfolgen kann, so dass sich ein durchgehender Steg 32 ergibt.. Beispielsweise kann jedes Teil des zweiteilig ausgeführten Federträgers 16 im Bereich um den Achsschenkelbolzen 4 als Halbzylinder ausgeführt sein.

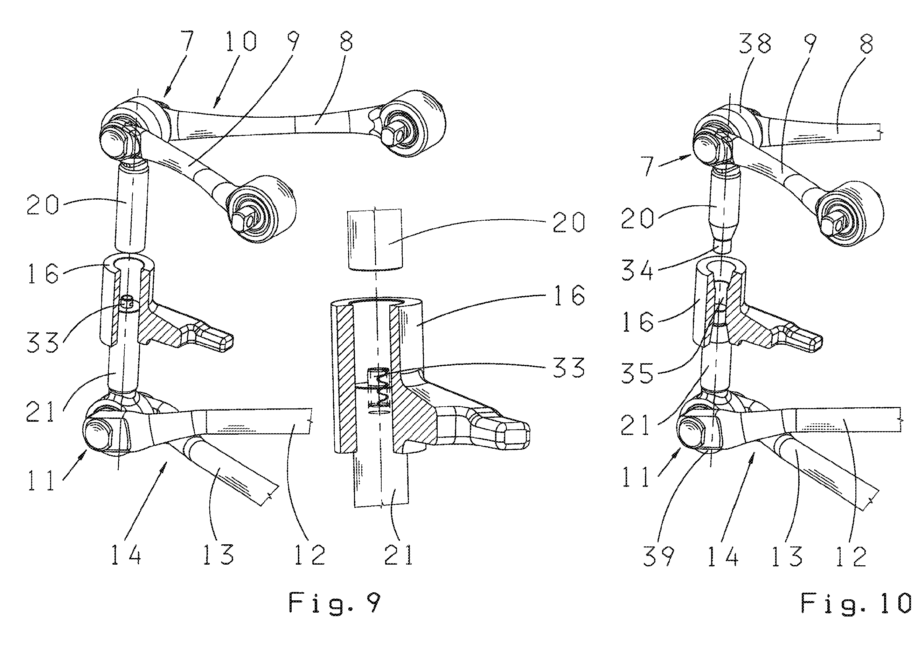

In Figur 9 ist ein Beispiel gezeigt, im Rahmen dessen die radiale Fixierung zwischen den Teilen 20, 21 des Achsschenkelbolzens 4 mittels eines in beiden Teilen eingreifenden Stiftes 33 erfolgt. Der rechte Teil der Figur 9 ist eine Detailansicht des Bereiches um den Federträger 16, wobei der in das Teil 21 eingreifende Stift 33 zum besseren Verständnis angedeutet ist.

Des weiteren ist in Figur 10 eine weitere Möglichkeit der axialen und radialen Fixierung der Teile 20, 21 eines zweiteilig ausgeführten Achsschenkelbolzens 4 im Federträger 16 veranschaulicht. Hierbei erfolgt die Fixierung mittels eines am dem Federträger 16 zugewandten Ende des jeweiligen Teils 20, 21 vorgesehenen Einschraubgewindes 34, welches mit einem Innengewinde 35 des Federträgers 16 zusammenwirkt. Vorzugsweise ist bei jedem Teil 20, 21 der Bereich unmittelbar am Einschraubgewinde 36 kegelstumpfförmig ausgebildet, wodurch in Zusammenwirkung mit dem entsprechend ausgebildeten Federträger 16 die erforderliche Spielfreiheit im zusammengesetzten Zustand gewährleistet wird.

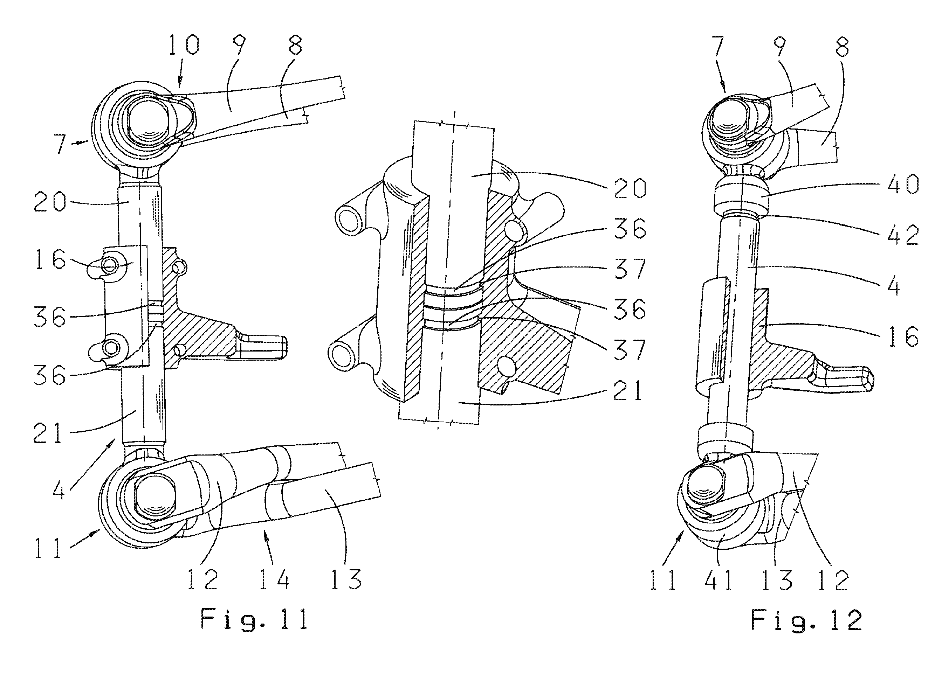

Bei dem in Figur 11 gezeigten Beispiel ist eine Ausgestaltung der axialen und radialen Fixierung zwischen den Teilen 20, 21 des Achsschenkelbolzens 4 und dem Federträger 16 gezeigt, bei der die axiale und radiale Fixierung mittels Klemmung durch die Verschraubung des zweiteilig ausgeführten Federträgers 16 erfolgt, wobei jedes Teil des zweiteilig ausgeführten Federträgers 16 im Bereich um den Achsschenkelbolzen 4 als Halbzylinder ausgeführt sein kann.

Eine zusätzliche axiale Fixierung kann, wie in Figur 11 gezeigt, dadurch erfolgen, dass jedes Teil 20, 21 an dessen dem anderen Teil zugewandten Ende eine Ringnut 36 aufweist, in die jeweils ein Steg 37 des Federträgers 16 eingreift, wobei sich durch Zusammenfügen der beiden Teile des Federträgers 16 zwei durchgehende Stege 37 ergeben. Die Stege 37 sind im rechten Teil der Figur 11 gezeigt.

Bei den in Figuren 3 bis 11 gezeigten Ausführungsbeispielen, bei denen der Achsschenkelbolzen 4 zweiteilig ausgeführt ist, sind die Querlenkerlagerungen 7, 11 des oberen und unteren Querlenkers 10, 14 als Rollenlager ausgeführt, wobei das dem Federträger abgewandte Ende der Teile 20, 21 des Achsschenkelbolzens 4 jeweils ein Gehäuse bzw. einen Gelenkkopf für die Querlenkerlagerungen 7, 11 aufweist, welches mit dem jeweiligen Teil 20, 21 vorzugsweise einstückig ausgebildet ist. Die Lagergehäuse sind in Figur 10 mit den Bezugszeichen 38 und 39 bezeichnet.

Bei einer nicht erfindungsgemässen einteiligen Ausführung des Achsschenkelbolzens 4 können die Querlenkerlagerungen 7, 11 als Kugelgelenke oder Molekulargelenke ausgeführt sein, wobei auch eine Ausgestaltung der Querlenkerlagerungen 7, 11 des oberen und unteren Querlenkers 10, 14 als Rollenlager möglich ist, wie anhand Figur 12 veranschaulicht.

Hierbei ist der Achsschenkelbolzen 4 einteilig ausgeführt, wobei die Gelenkköpfe 40, 41 für die Querlenkerlagerungen 7, 11 als separate Teile ausgeführt sind, und mit dem Achsschenkelbolzen 4 beispielsweise mittels eines Einschraubgewindes 42 am Achsschenkelbolzen 4 verbindbar sind, wobei das dem Gelenkkopf zugewandte Ende des Achsschenkelbolzens 4 vorzugsweise kegelstumpfförmig ausgeführt ist, um eine weitgehende Spielfreiheit zu ermöglichen. Gemäß der Erfindung kann lediglich ein Gelenkkopf 40, 41 als separates Teil ausgeführt sein.

Fig. 11:
Bei der gezeigten Ausführungsform erfolgt die axiale Fixierung und Verdrehsicherung des Federträgers 16 am Achsschenkelbolzen 4 mittels Klemmung durch Verschraubung des zweiteilig ausgeführten Federträgers 16, wobei eine zusätzliche axiale Fixierung dadurch erfolgen kann, dass der Achsschenkelbolzen 4 eine Ringnut aufweist, in die ein Steg des Federträgers 16 eingreift, wobei sich durch Zusammenfügen der beiden Teile des Federträgers ein durchgehender Steg ergibt.

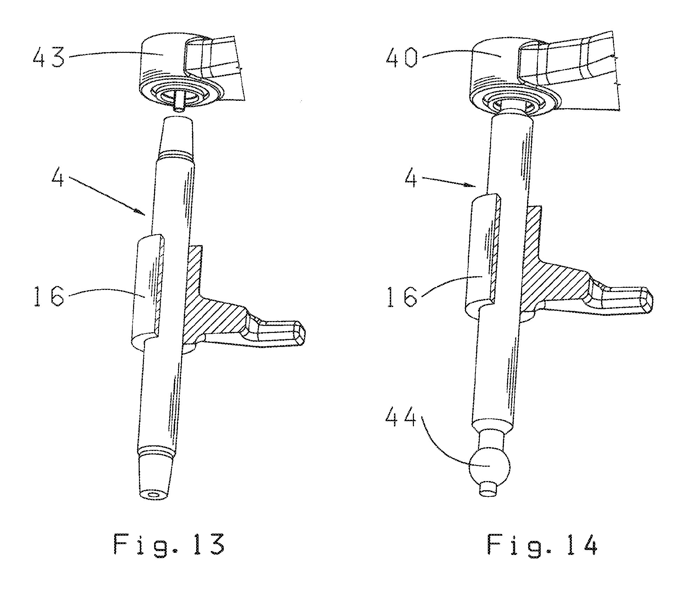

In Figur 13 ist ein Ausführungsbeispiel dargestellt, bei dem der Achsschenkelbolzen 4 einteilig ausgeführt ist, wobei die Querlenkerlagerungen 7, 11 als Kugel- oder Molekulargelenke 43 ausgeführt sind, die auf das jeweilige Ende des Achsschenkelbolzens 4 aufgeschraubt werden.

Bei dem in Figur 14 gezeigten Ausführungsbeispiel ist der Achsschenkelbolzen 4 einteilig ausgeführt, wobei an den Enden des Achsschenkelbolzens 4 jeweils ein Kugel- oder Molekulargelenkkopf 44 integriert ist, wobei die Gelenkmontage mit der Querlenkermontage erfolgt. In Figur 14 ist der obere Gelenkkopf 40 im montierten Zustand gezeigt, wobei am anderen Ende des Achsschenkelbolzens 4 der integrierte Kugel- oder Molekulargelenkkopf 44 vor der Querlenkermontage gezeigt ist.

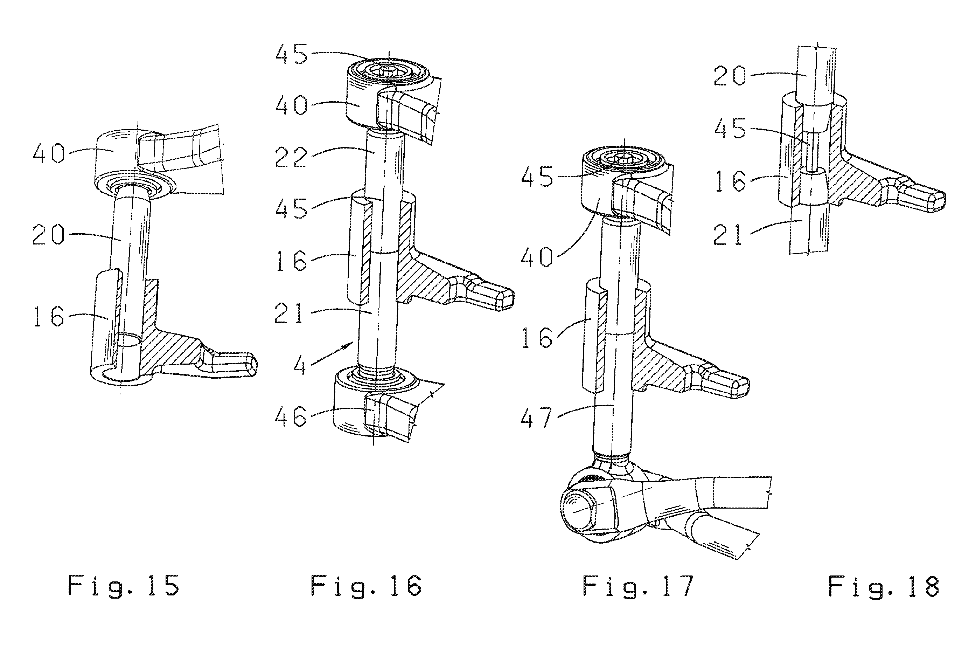

Gemäß der Erfindung und bezugnehmend auf Figur 15 kann der Achsschenkelbolzen 4 zweiteilig ausgeführt sein, wobei in das dem jeweiligen Querlenker 10, 14 zugewandte Ende der Teile 20 bzw. 21 des Achsschenkelbolzens 4 ein Kugel- oder Molekulargelenkkopf 44 integriert ist. Bei dem gezeigten Beispiel ist der obere Gelenkkopf 40 im montierten Zustand gezeigt. Hierbei kann die axiale und/oder radiale Fixierung und/oder Verdrehsicherung der Teile 20, 21 zueinander oder zum Federträger 16 gemäß den oben beschriebenen Konzeptionen erfolgen.

Des weiteren kann im Rahmen einer vorteilhaften Weiterbildung der in Figur 15 gezeigten Ausführungsform, die Gegenstand der Figur 16 ist, eine Durchgangsschraube 45 mit Mutter 46 vorgesehen sein, über die die beiden Teile 20, 21 des Achsschenkelbolzens 4 miteinander verbunden werden können. Alternativ zur Ausführung mit Schraubenmutter 46 kann die durch das erste Teil 20 geführte Schraube 45 in einem Gewinde 47 im zweiten Teil 21 des Achsschenkelbolzens 4 eingeschraubt sein, wie anhand Figur 17 veranschaulicht. Eine zusätzliche axiale und/oder radiale Fixierung kann z.B. mittels Klemmung durch die Verschraubung eines zweiteilig ausgeführten Federträgers erzielt werden.

Des weiteren kann für den Fall eines zweiteilig ausgeführten Achsschenkelbolzens 4 die axiale Fixierung der beiden Teile 20, 21 zueinander und zum Federträger 16 dadurch erfolgen, dass die im Federträger 16 angeordneten Enden der Teile 20, 21 kegelstumpfförmig ausgeführt sind und im Federträger formschlüssig aufgenommen werden, wobei die beiden Teile 20, 21 mittels einer Durchgangsschraube 45 mit Mutter miteinender verschraubt sind. Alternativ kann die durch das erste Teil geführte Schraube 45 in einem Gewinde im zweiten Teil 21 des Achsschenkelbolzens 4 eingeschraubt sein.

Selbstverständlich fällt auch jede konstruktive Ausbildung, insbesondere jede räumliche Anordnung der Bauteile der erfindungsgemäßen Einzelradaufhängung an sich sowie zueinander und soweit technisch sinnvoll, unter den Schutzumfang der vorliegenden Ansprüche, ohne die Funktion der Einzelradaufhängung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Achsschenkel
- 2: Aufnahme
- 3: Aufnahme
- 4: Achsschenkelbolzen
- 5: Drehachse
- 6: Fahrzeugrad
- 7: Lagerung
- 8: Querlenkerarm
- 9: Querlenkerarm
- 10: Querlenker
- 11: Lagerung
- 12: Querlenkerarm
- 13: Querlenkerarm
- 14: Querlenker
- 15: Felge
- 16: Träger, Federträger
- 17: Feder-Dämpfer-Modul
- 18: Dämpfer
- 19: Luftfeder
- 20: oberes Teil des Achsschenkelbolzens
- 21: unteres Teil des Achsschenkelbolzens
- 22: Schnappring
- 23: Ringnut
- 24: Ringnut
- 25: Ringnut
- 26: Bohrung
- 27: Ausklingung
- 28: Außenverzahnung
- 29: Innenverzahnung
- 30: Stift
- 31: Umfangsnut
- 32: Steg
- 33: Stift
- 34: Einschraubgewinde
- 35: Innengewinde
- 36: Ringnut
- 37: Steg
- 38: Lagergehäuse
- 39: Lagergehäuse
- 40: Gelenkkopf
- 41: Gelenkkopf
- 42: Einschraubgewinde
- 43: Kugel- oder Molekulargelenk
- 44: Kugel- oder Molekulargelenkkopf
- 45: Durchgangsschraube
- 46: Schraubenmutter
- 47: Gewinde

## Patentansprüche

1. Einzelradaufhängung, mit einem um eine Drehachse (5) drehbar angeordneten Achsschenkel (1), welcher sich auf einem Federträger (16) abstützt, der über einen Dämpfer (18) und eine Luftfeder (19) oder über ein Feder-Dämpfer-Modul (17) mit dem Fahrzeugrahmen verbunden ist, wobei der Achsschenkel (1) über einen Achsschenkelbolzen (4) mit dem Federträger (16) verbunden ist, wobei die Einzelradaufhängung mindestens einen oberen Querlenker (10) und mindestens einen unteren Querlenker (14) aufweist, wobei die Querlenker (10, 14) am oberen Ende bzw. am unteren Ende des Achsschenkelbolzens (4) gelagert sind, wobei der Achsschenkel (1) und die Querlenker (10, 14) schwenkbar zum Achsschenkelbolzen (4) gelagert und der Federträger (16) drehfest mit dem Achsschenkelbolzen (4) verbunden ist, wobei der Achsschenkelbolzen (4) das Verbindungsglied für Federträger (16), Achsschenkel (1) und oberen und unteren Querlenker (10, 14) bildet, und wobei der Achsschenkelbolzen (4) zweiteilig ausgeführt ist, **dadurch gekennzeichnet, dass** der Achsschenkelbolzen ein oberes Teil (20) und ein unteres Teil (21) aufweist, wobei die axiale und/oder radiale Fixierung und/oder Verdrehsicherung der Teile (20, 21) zueinander und/oder zum Federträger (16) durch das Zusammenwirken der Teile (20, 21) mit dem Federträger (16) oder durch einen Presssitz erfolgt, wobei die axiale und radiale Fixierung zwischen den Teilen (20, 21) des Achsschenkelbolzens (4) und dem Federträger (16) mittels Ausklinkungen und Ringnuten erfolgt, wobei jedes Teil (20, 21) an dessen dem anderen Teil zugewandten Ende eine Ausklingung (27) aufweist, wobei im montierten Zustand die Teile (20, 21) derart verdreht werden, dass sie sich über die Ausklinkungen (27) miteinander in Eingriff befinden und wobei jedes Teil (20, 21) an dessen dem anderen Teil zugewandten Ende im Bereich, an dem keine Ausklinkung vorgesehen ist eine Umfangsnut (31) aufweist, wobei im montierten Zustand die Umgangsnuten (31) beider Teile (20, 21) eine durchgehende Ringnut ergeben, in die ein am Federträger (16) vorgesehener Steg (32) eingreift.

2. Einzelradaufhängung nach Anspruch 1, **dadurch gekennzeichnet, dass** der Federträger (16) zweiteilig ausgeführt ist, wobei nach der Montage die beiden Teile miteinander verbunden werden, so dass sich ein durchgehender Steg (32) ergibt.

3. Einzelradaufhängung nach Anspruch 1, **dadurch gekennzeichnet, dass** die radiale Fixierung der Teile (20, 21) des Achsschenkelbolzens (4) zueinander mittels eines in beiden Teilen eingreifenden Stiftes (33) erfolgt.

4. Einzelradaufhängung nach Anspruch 1, **dadurch gekennzeichnet, dass** die axiale und radiale Fixierung der Teile (20, 21) des Achsschenkelbolzens (4) zueinander und zum Federträger (16) mittels eines am dem Federträger (16) zugewandten Ende des jeweiligen Teils (20, 21) vorgesehenen Einschraubgewindes (34) erfolgt, welches mit einem Innengewinde (35) des Federträgers (16) zusammenwirkt.

5. Einzelradaufhängung nach Anspruch 4, **dadurch gekennzeichnet, dass** bei jedem Teil (20, 21) der Bereich unmittelbar am Einschraubgewinde (36) kegelstumpfförmig ausgebildet ist, wodurch in Zusammenwirkung mit dem entsprechend ausgebildeten Federträger (16) die erforderliche Spielfreiheit im zusammengesetzten Zustand gewährleistet wird.

6. Einzelradaufhängung, mit einem um eine Drehachse (5) drehbar angeordneten Achsschenkel (1), welcher sich auf einem Federträger (16) abstützt, der über einen Dämpfer (18) und eine Luftfeder (19) oder über ein Feder-Dämpfer-Modul (17) mit dem Fahrzeugrahmen verbunden ist, wobei der Achsschenkel (1) über einen Achsschenkelbolzen (4) mit dem Federträger (16) verbunden ist, wobei die Einzelradaufhängung mindestens einen oberen Querlenker (10) und mindestens einen unteren Querlenker (14) aufweist, wobei die Querlenker (10, 14) am oberen Ende bzw. am unteren Ende des Achsschenkelbolzens (4) gelagert sind, wobei der Achsschenkel (1) und die Querlenker (10, 14) schwenkbar zum Achsschenkelbolzen (4) gelagert und der Federträger (16) drehfest mit dem Achsschenkelbolzen (4) verbunden ist, wobei der Achsschenkelbolzen (4) das Verbindungsglied für Federträger (16), Achsschenkel (1) und oberen und unteren Querlenker (10, 14) bildet, und wobei der Achsschenkelbolzen (4) zweiteilig ausgeführt ist, **dadurch gekennzeichnet, dass** der Achsschenkelbolzen ein oberes Teil (20) und ein unteres Teil (21) aufweist, wobei die axiale und/oder radiale Fixierung und/oder Verdrehsicherung der Teile (20, 21) zueinander und/oder zum Federträger (16) durch das Zusammenwirken der Teile (20, 21) mit dem Federträger (16) oder durch einen Presssitz erfolgt, wobei die axiale und radiale Fixierung der Teile (20, 21) des Achsschenkelbolzens (4) zueinander und zum Federträger (16) mittels Klemmung durch die Verschraubung des zweiteilig ausgeführten Federträgers (16) erfolgt.

7. Einzelradaufhängung nach Anspruch 6 **dadurch gekennzeichnet, dass** jedes Teil des zweiteilig ausgeführten Federträgers (16) im Bereich um den Achsschenkelbolzen (4) als Halbzylinder ausgeführt ist.

8. Einzelradaufhängung nach Anspruch 6 oder 7, dadurch **ge-kennzeichnet**, dass eine zusätzliche axiale Fixierung der Teile (20, 21) des Achsschenkelbolzens (4) zueinander und zum Federträger (16) dadurch erfolgt, dass jedes Teil (20, 21) an dessen dem anderen Teil zugewandten Ende eine Ringnut (36) aufweist, in die jeweils ein Steg (37) des Federträgers (16) eingreift, wobei sich durch Zusammenfügen der beiden Teile des Federträgers (16) zwei durchgehende Stege (37) ergeben.

9. Einzelradaufhängung nach einem der vorangehenden Ansprüche, **dadurch gekennzeichnet, dass** die Querlenkerlagerungen (7, 11) des oberen und unteren Querlenkers (10, 14) als Rollenlager ausgeführt sind, wobei das dem Federträger (16) abgewandte Ende der Teile (20, 21) des Achsschenkelbolzens (4) jeweils ein Gehäuse (38, 39) bzw. einen Gelenkkopf für die Querlenkerlagerungen (7, 11) aufweist.

10. Einzelradaufhängung nach Anspruch 9, **dadurch gekennzeichnet, dass** das Gehäuse (38, 39) mit dem jeweiligen Teil (20, 21) einstückig ausgebildet ist.

11. Einzelradaufhängung nach einem der vorangehenden Ansprüche, **dadurch gekennzeichnet, dass** in das dem jeweiligen Querlenker (10, 14) zugewandte Ende der Teile (20, 21) des Achsschenkelbolzens (4) ein Kugel- oder Molekulargelenkkopf (44) integriert ist.

12. Einzelradaufhängung nach Anspruch 11, **dadurch gekennzeichnet, dass** eine Durchgangsschraube (45) mit Mutter (46) vorgesehen ist, über die die beiden Teile (20, 21) des Achsschenkelbolzens (4) miteinander verbunden sind.

13. Einzelradaufhängung nach Anspruch 11, **dadurch gekennzeichnet, dass** eine Schraube (45) vorgesehen ist, die durch das eine Teil (20) oder (21) geführt ist und in einem Gewinde (47) im anderen Teil (21) bzw. (20) des Achsschenkelbolzens (4) eingeschraubt wird.

14. Einzelradaufhängung nach Anspruch 11 **dadurch gekennzeichnet, dass** die axiale Fixierung der beiden Teile (20, 21) zueinander und zum Federträger (16) dadurch erfolgt, dass die im Federträger (16) angeordneten Enden der Teile (20, 21) kegelstumpfförmig ausgeführt sind und im Federträger (16) formschlüssig aufgenommen werden, wobei die beiden Teile (20, 21) mittels einer Durchgangsschraube (45) mit Mutter miteinender verschraubt sind.

## Claims

1. Independent wheel suspension, with a stub axle (1) which is arranged rotatably about an axis of rotation (5) and which is supported on a spring carrier (16) which is connected to the vehicle frame via a damper (18) and a pneumatic spring (19) or via a spring/damper module (17), the stub axle (1) being connected to the spring carrier (16) via a kingpin (4), the independent wheel suspension having at least one upper transverse link (10) and at least one lower transverse link (14), the transverse links (10, 14) being mounted respectively at the upper end and at the lower end of the kingpin (4), the stub axle (1) and the transverse links (10, 14) being mounted pivotably with respect to the kingpin (4), and the spring carrier (16) being connected fixedly in terms of rotation to the kingpin (4), the kingpin (4) forming the connecting member for the spring carrier (16), stub axle (1) and upper and lower transverse links (10, 14), and the kingpin (4) being of two-part form, **characterized in that** the kingpin has an upper part (20) and a lower part (21), the axial and/or radial fixing and/or the securing of the parts (20, 21) against twisting with respect to one another and/or with respect to the spring carrier (16) taking place as a result of the cooperation of the parts (20, 21) with the spring carrier (16) or by means of a pressfit, the axial and radial fixing between the parts (20, 21) of the kingpin (4) and the spring carrier (16) taking place by means of indentations and annular grooves, each part (20, 21) having an indentation (27) at its end facing the other part, the parts (20, 21) being twisted in the assembled state in such a way that they are in engagement with one another via the indentations (27), and each part (20, 21) having, at its end facing the other part, a circumferential groove (31) in the region on which there is no indentation provided, in the assembly state the circumferential grooves (31) of the two parts (20, 21) resulting in a continuous annular groove into which a ridge (32) provided on the spring carrier (16) engages.

2. Independent wheel suspension according to Claim 1, **characterized in that** the spring carrier (16) is of two-part form, the two parts being connected to one another after assembly so that a continuous ridge (32) is obtained.

3. Independent wheel suspension according to Claim 1, **characterized in that** the radial fixing of the parts (20, 21) of the kingpin (4) to one another takes place by means of a peg (33) engaging in both parts.

4. Independent wheel suspension according to Claim 1, **characterized in that** the axial and radial fixing of the parts (20, 21) of the kingpin (4) to one another and to the spring carrier (16) takes place by means of a screw-in thread (34) which is provided at that end of respective parts (20, 21) facing the spring carrier (16) and which cooperates with an internal thread (35) of the spring carrier (16).

5. Independent wheel suspension according to Claim 4, **characterized in that**, on each part (20, 21), the region directly at the screw-in thread (36) is of frustoconical form, as a result of which, in cooperation with the correspondingly formed spring carrier (16), the required freedom from play is ensured in the assembled state.

6. Independent wheel suspension, with a stub axle (1) which is arranged rotatably about an axis of rotation (5) and which is supported on a spring carrier (16) which is connected to the vehicle frame via a damper (18) and a pneumatic spring (19) or via a spring/damper module (17), the stub axle (1) being connected to the spring carrier (16) via a kingpin (4), the independent wheel suspension having at least one upper transverse link (10) and at least one lower transverse link (14), the transverse links (10, 14) being mounted respectively at the upper end and at the lower end of the kingpin (4), the stub axle (1) and transverse links (10, 14) being mounted pivotably with respect to the kingpin (4), and the spring carrier (16) being connected fixedly in terms of rotation to the kingpin (4), the kingpin (4) forming the connecting member for the spring carrier (16), stub axle (1) and upper and lower transverse links (10, 14), and the kingpin (4) being of two-part form, **characterized in that** the kingpin has an upper part (20) and a lower part (21), the axial and/or radial fixing and/or the securing of the parts (20, 21) against twisting with respect to one another and/or with respect to the spring carrier (16) taking place as a result of the cooperation of the parts (20, 21) with the spring carrier (16) or by means of a pressfit, the axial and radial fixing of the parts (20, 21) of the kingpin (4) to one another and to the spring carrier (16) taking place by means of clamping as a result of the screwing together of the spring carrier (16) of two-part form.

7. Independent wheel suspension according to Claim 6, **characterized in that** each part of the spring carrier (16) of two-part form is designed in the region around the kingpin (4) as a semi-cylinder.

8. Independent wheel suspension according to Claim 6 or 7, **characterized in that** additional axial fixing of the parts (20, 21) of the kingpin (4) to one another and to the spring carrier (16) takes place **in that** each part (20, 21) has at its end facing the other part an annular groove (36), into which in each case a ridge (37) of the spring carrier (16) engages, two continuous ridges (37) being obtained by the two parts of the spring carrier (16) being joined together.

9. Independent wheel suspension according to one of the preceding claims, **characterized in that** the transverse-link mountings (7, 11) of the upper and of the lower transverse link (10, 14) are designed as roller bearings, that end of the parts (20, 21) of the kingpin (4) which faces away from the spring carrier (16) having in each case a housing (38, 39) or an articulated head for the transverse-link mountings (7, 11).

10. Independent wheel suspension according to Claim 9, **characterized in that** the housing (38, 39) is formed in one piece with the respective part (20, 21).

11. Independent wheel suspension according to one of the preceding claims, **characterized in that** a spherical or molecular articulated head (44) is integrated **in that** end of the parts (20, 21) of the kingpin (4) which faces the respective transverse link (10, 14).

12. Independent wheel suspension according to Claim 11, **characterized in that** a through-screw (45) with a nut (46) is provided, by which the two parts (20, 21) of kingpin (4) are connected to one another.

13. Independent wheel suspension according to Claim 11, **characterized in that** a screw (45) is provided, which is led through one part (20) or (21) and is screwed in a thread (47) in the other part (21) or (20) of the kingpin (4).

14. Independent wheel suspension according to Claim 11, **characterized in that** the axial fixing of the two parts (20, 21) to one another and to the spring carrier (16) takes place **in that** those ends of the parts (20, 21) which are arranged in the spring carrier (16) are of frustoconical form and are received positively in the spring carrier (16), the two parts (20, 21) being screwed to one another by means of a through-screw (45) with a nut.

## Revendications

1. Suspension à roues indépendantes, comprenant une fusée d'essieu (1) disposée de manière rotative autour d'un axe de rotation (5), qui s'appuie sur un support à ressort (16) qui est connecté par le biais d'un amortisseur (18) et d'un ressort pneumatique (19) ou par le biais d'un module ressort-amortisseur (17) au châssis du véhicule, la fusée d'essieu (1) étant connectée par le biais d'un pivot de fusée d'essieu (4) au support à ressort (16), la suspension à roues indépendantes présentant au moins un bras oscillant transversal supérieur (10) et au moins un bras oscillant transversal inférieur (14), les bras oscillants transversaux (10, 14) étant supportés à l'extrémité supérieure ou à l'extrémité inférieure du pivot de fusée d'essieu (4), la fusée d'essieu (1) et les bras oscillants transversaux (10, 14) étant supportés de manière pivotante par rapport au pivot de fusée d'essieu (4) et le support à ressort (16) étant connecté de manière solidaire en rotation au pivot de fusée d'essieu (4), le pivot de fusée d'essieu (4) formant l'organe de liaison pour le support à ressort (16), la fusée d'essieu (1) et les bras oscillants transversaux supérieur et inférieur (10, 14), le pivot de fusée d'essieu (4) étant réalisé en deux parties, **caractérisée en ce que** le pivot de fusée d'essieu présente une partie supérieure (20) et une partie inférieure (21), la fixation axiale et/ou radiale et/ou la fixation en rotation des parties (20, 21) l'une par rapport à l'autre et/ou par rapport au support à ressort (16) s'effectuant par la coopération des parties (20, 21) avec le support à ressort (16) ou par un ajustement serré, la fixation axiale et radiale entre les parties (20, 21) du pivot de fusée d'essieu (4) et le support à ressort (16) s'effectuant au moyen d'encoches et de rainures annulaires, chaque partie (20, 21) présentant, au niveau de son extrémité tournée vers l'autre partie, une encoche (27), les parties (20, 21) étant tournées dans l'état monté de telle sorte qu'elles se trouvent en prise l'une avec l'autre par le biais des encoches (27) et chaque partie (20, 21) présentant, au niveau de son extrémité tournée vers l'autre partie, dans la région dans laquelle aucune encoche n'est prévue, une rainure périphérique (31), les rainures périphériques (31) des deux parties (20, 21), dans l'état monté, produisant une rainure annulaire continue, dans laquelle s'engage une nervure (32) prévue sur le support à ressort (16).

2. Suspension à roues indépendantes selon la revendication 1, **caractérisée en ce que** le support à ressort (16) est réalisé en deux parties, les deux parties étant connectées l'une à l'autre après le montage, de telle sorte que l'on obtienne une nervure continue (32).

3. Suspension à roues indépendantes selon la revendication 1, **caractérisée en ce que** la fixation radiale des parties (20, 21) du pivot de fusée d'essieu (4) l'une à l'autre s'effectue au moyen d'une goupille (33) venant en prise dans les deux parties.

4. Suspension à roues indépendantes selon la revendication 1, **caractérisée en ce que** la fixation axiale et radiale des parties (20, 21) du pivot de fusée d'essieu (4) l'une par rapport à l'autre et par rapport au support à ressort (16) s'effectue au moyen d'un filetage d'insertion (34) prévu à l'extrémité de la partie respective (20, 21) tournée vers le support à ressort (16), lequel filetage d'insertion coopère avec un filetage interne (35) du support à ressort (16).

5. Suspension à roues indépendantes selon la revendication 4, **caractérisée en ce que** pour chaque partie (20, 21), la région directement au niveau du filetage d'insertion (36) est réalisée sous forme tronconique, de sorte que la liberté de jeu requise dans l'état assemblé soit garantie en coopération avec le support à ressort (16) réalisé de manière correspondante.

6. Suspension à roues indépendantes, comprenant une fusée d'essieu (1) disposée de manière rotative autour d'un axe de rotation (5), qui s'appuie sur un support à ressort (16) qui est connecté par le biais d'un amortisseur (18) et d'un ressort pneumatique (19) ou par le biais d'un module ressort-amortisseur (17) au châssis du véhicule, la fusée d'essieu (1) étant connectée par le biais d'un pivot de fusée d'essieu (4) au support à ressort (16), la suspension à roues indépendantes présentant au moins un bras oscillant transversal supérieur (10) et au moins un bras oscillant transversal inférieur (14), les bras oscillants transversaux (10, 14) étant supportés à l'extrémité supérieure ou à l'extrémité inférieure du pivot de fusée d'essieu (4), la fusée d'essieu (1) et les bras oscillants transversaux (10, 14) étant supportés de manière pivotante par rapport au pivot de fusée d'essieu (4) et le support à ressort (16) étant connecté de manière solidaire en rotation au pivot de fusée d'essieu (4), le pivot de fusée d'essieu (4) formant l'organe de liaison pour le support à ressort (16), la fusée d'essieu (1) et les bras oscillants transversaux supérieur et inférieur (10, 14), le pivot de fusée d'essieu (4) étant réalisé en deux parties, **caractérisée en ce que** le pivot de fusée d'essieu présente une partie supérieure (20) et une partie inférieure (21), la fixation axiale et/ou radiale et/ou la fixation en rotation des parties (20, 21) l'une par rapport à l'autre et/ou par rapport au support à ressort (16) s'effectuant par la coopération des parties (20, 21) avec le support à ressort (16) ou par un ajustement serré, la fixation axiale et radiale des parties (20, 21) du pivot de fusée d'essieu (4) l'une par rapport à l'autre et par rapport au support à ressort (16) s'effectuant au moyen d'un serrage par vissage du support à ressort (16) réalisé en deux parties.

7. Suspension à roues indépendantes selon la revendication 6, **caractérisée en ce que** chaque partie du support à ressort (16) réalisé en deux parties est réalisée sous forme de demi-cylindre dans la région autour du pivot de fusée d'essieu (4).

8. Suspension à roues indépendantes selon la revendication 6 ou 7, **caractérisée en ce qu'**une fixation axiale supplémentaire des parties (20, 21) du pivot de fusée d'essieu (4) l'une par rapport à l'autre et par rapport au support à ressort (16) s'effectue par le fait que chaque partie (20, 21) présente, à son extrémité tournée vers l'autre partie, une rainure annulaire (36) dans laquelle s'engage à chaque fois une nervure (37) du support à ressort (16), deux nervures continues (37) étant obtenues par l'assemblage des deux parties du support à ressort (16).

9. Suspension à roues indépendantes selon l'une quelconque des revendications précédentes, **caractérisée en ce que** les supports sur palier des bras oscillants transversaux (7, 11) des bras oscillants transversaux supérieur et inférieur (10, 14) sont réalisés sous forme de paliers à rouleaux, l'extrémité des parties (20, 21) du pivot de fusée d'essieu (4) opposée au support à ressort (16) présentant à chaque fois un boîtier (38, 39) ou une tête d'articulation pour les supports sur palier des bras oscillants transversaux (7, 11).

10. Suspension à roues indépendantes selon la revendication 9, **caractérisée en ce que** le boîtier (38, 39) est réalisé d'une seule pièce avec la partie respective (20, 21).

11. Suspension à roues indépendantes selon l'une quelconque des revendications précédentes, **caractérisée en ce qu'**une tête d'articulation sphérique ou moléculaire (44) est intégrée dans l'extrémité des parties (20, 21) du pivot de fusée d'essieu (4) tournée vers le bras oscillant transversal respectif (10, 14).

12. Suspension à roues indépendantes selon la revendication 11, **caractérisée en ce qu'**une vis de passage (45) est pourvue d'un écrou (46) par le biais duquel les deux parties (20, 21) du pivot de fusée d'essieu (4) sont connectées l'une à l'autre.

13. Suspension à roues indépendantes selon la revendication 11, **caractérisée en ce qu'**une vis (45) est prévue, laquelle est guidée à travers l'une des parties (20) ou (21) et est vissée dans un filetage (47) dans l'autre partie (21) ou (20) du pivot de fusée d'essieu (4).

14. Suspension à roues indépendantes selon la revendication 11, **caractérisée en ce que** la fixation axiale des deux parties (20, 21) l'une par rapport à l'autre et par rapport au support à ressort (16) s'effectue par le fait que les extrémités des parties (20, 21) disposées dans le support à ressort (16) sont réalisées sous forme tronconique et sont reçues par engagement par correspondance de forme dans le support à ressort (16), les deux parties (20, 21) étant vissées l'une à l'autre au moyen d'une vis de passage (45) à écrou.
